(19) **Europäisches Patentamt**

**European Patent Office**

**Office européen des brevets**

(11) **EP 1 172 923 B1**

(12) **EUROPEAN PATENT SPECIFICATION**

(45) Date of publication and mention
of the grant of the patent:
**13.09.2006 Bulletin 2006/37**

(51) Int Cl.:
*H03K 17/12* (2006.01)   *H02M 3/158* (2006.01)

(21) Application number: **00830481.8**

(22) Date of filing: **10.07.2000**

(54) **Switching voltage regulator, having a driver circuit of a power MOS switch**

Spannungschaltregler, mit einer Treiberschaltung eines MOS-Leistungsschalters

Régulateur de tension à découpage, avec un circuit de commande d'un interrupteur MOS de puissance

(84) Designated Contracting States:
**DE FR GB IT**

(43) Date of publication of application:
**16.01.2002 Bulletin 2002/03**

(73) Proprietor: **STMicroelectronics S.r.l.**
**20041 Agrate Brianza (Milano) (IT)**

(72) Inventors:
• **Marino, Filippo**
**95030 Tremestieri Etneo (Catania) (IT)**
• **Capici, Salvatore**
**95030 Tremestieri Etneo (Catania) (IT)**

(74) Representative: **Botti, Mario**
**Botti & Ferrari S.r.l.,**
**Via Locatelli, 5**
**20124 Milano (IT)**

(56) References cited:
**EP-A- 0 581 016**      **US-A- 4 616 142**
**US-A- 5 949 158**

• **PATENT ABSTRACTS OF JAPAN vol. 1998, no. 02, 30 January 1998 (1998-01-30) & JP 09 285120 A (OKI ELECTRIC IND CO LTD), 31 October 1997 (1997-10-31)**

**Description**

Field of the Invention

This invention relates to a driver circuit for a MOS power switch incorporated in a switching voltage regulator.

The setting of this invention is the development of a new family of devices fabricated with bipolar-CMOS-DMOS-VDMOS (BCDV) technology, where CMOS stands for complementary metal oxide semiconductor, DMOS stands for double-diffused MOS, and VDMOS stands for vertical DMOS. More specifically, the present invention relates to a switching voltage regulator of the step-down type which has a plurality of output currents and is associated with a current loop for a battery charger. The following description is made with reference to this technical field for the sake of simplicity only.

Switching voltage regulators are widely utilized in many applications because of their efficiency and precision features. These regulators include, as their basic components: a transistor-based power switch, a loop-back diode, an LC output filter, and an optional current sensor for the battery charger. A switch control circuit of a power source equipment is known from the Patent Abstract of Japan No. 09 285120 in the name of OKI Electric Ind. Co. Ltd..

Prior Art

To be competitive, new-generation regulators must have ever higher switching frequencies, so that ever smaller external components can be employed to fill demands for both reduced circuit space occupation and enhanced cost efficiency. In particular, these regulators should have the number of their external components reduced to a minimum. The frequency increase implies a limited regulator efficiency mainly because of the switching losses of the power switch. Accordingly, the most critical aspect of the regulator carrying out is its circuit portion devoted to driving the power switch, since switching losses are dependent on that portion.

One of the problems faced by the driver circuits of such power switches is that of achieving a total reduction of both static and dynamic consumption, as well as a control of the current edges so as to minimize electromagnetic disturbance and avoid spurious operation due to any current limiters becoming activated at power-on.

Another no less important problem is the power switch stressing caused by the speed of the power on/off edges, and the presence of parasitic RLC circuit portions in the load as well as the device itself. In a specific application, bonding wires and board conduction paths would be connected in series with the source and the drain of the power switch.

From physics, it is known that an inductor being traversed by a current I would resist a sharp variation in the current by presenting an overvoltage at its heads, which is proportional to the inductance L value and the rate of variation of the current, according to the following relation:

$$\Delta V = L(dI/dt).$$

In switching voltage regulators, the current flowing through the power switch exhibits variations of several hundreds Amperes per microsecond, both at power-on and power-off phases. The parasitic inductance L of bonding wires may instead be as high as a few tens nH. It follows that, with the current edges being so fast, and because of the values of the parasitic inductance, overvoltages of even 10V may occur at the source and the drain of the power switch.

If the regulator operates at the highest admissible input voltage, these overvoltages, by adding with one another, can push the power switch transistor outside its SOA (Safe Operating Area), possibly wrecking it by voltage breakdown.

The phenomenon just described is bound to occur when either an N-channel or a P-channel MOS power transistor is used.

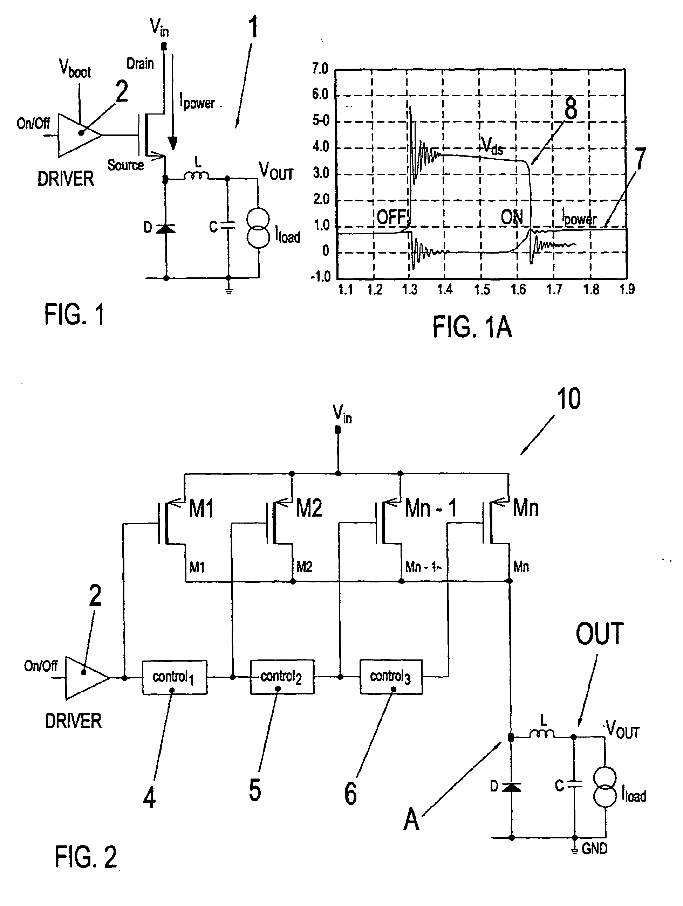

Figure 1 herein shows, by way of example, the schematic structure of a switching voltage regulator 1 which comprises an N-channel MOS power transistor. The driver circuit 2 of such regulator has been optimized to minimize the effect of the time taken to go through the loop-back diode, and in accordance with the teachings of US Patent No. 5,883,505 in the name of the same Applicant.

The power-on edge is optimized essentially by having the gate of the power switch slowly charged until the loop-back on the diode D is over. This gate is then charged very fast to minimize switching losses.

In this type of regulator, the critical switching edge is still the power-off edge, because in order to control the current edge at power-off, it would be necessary to proceed in exactly the opposite way to the power-on situation.

In fact, in order to slow down the current edge, the power transistor gate would have to be discharged very slowly, and this is unfortunately in conflict with the need of consumption minimization, while also presenting practical difficulties because the power transistor is very large (i.e. W of a few tens mm), and when operating close to the threshold value, a few mV variation of the voltage Vgs between the gate and source terminals is enough to produce large variations of the drain Ipower current. The drive voltage of the power transistor should therefore be controlled in a very precise manner (within one mV).

In other words, to handle the current edge at power-off and at the same time to achieve optimized efficiency, Vgs of the power transistor should be quickly decreased until it nears the threshold value and then should be slowly and accurately varied within one mV. Producing a suitable circuit to fill this demand is practically impossible with current BCD technologies; in fact, components would be needed which can respond within a very short time (a few nanoseconds). And even where such components can be made available, it would be necessary to have the voltage at the gate terminal varied very slowly and with a very high precision. (A few mV variation can result in a several Ampere variation occurring in the current.)

The state of the art provides no circuital solutions which can meet both of the aforementioned requirements both at power-on and at power-off. It has been current practice to try to overcome the cited problem by driving the gate terminal of the power transistor very slowly also during the first power-on phase, when this would be unnecessary. Shown in Figure 1A are respective patterns 7, 8 of the Ipower current and of the voltage drop Vds for the circuit of Figure 1, at the power-on and power-off stages thereof.

This latter solution obviously results in increased switching losses and, hence, poorer overall efficiency of the regulator.

The underlying technical problem of this invention is to contrive a new type of driver circuit for a power transistor, which circuit exhibits appropriate structural and functional features to afford reliable handling of the overvoltage effects, caused by the speed of the current edges during the switching, thereby to obviate the aforementioned drawbacks with reference to the prior art.

In essence, the driver circuit of this invention is to ensure the same speed of response at the power-on as at the power-off edges, at the same time minimizing consumption and avoiding to stress the power transistor gate.

Summary of the Invention

The principle of this invention is the one of providing the power transistor which forms the power switch by means of a plurality of transistors which are connected to each other in parallel and have scaled dimensions so that they can be independently driven.

Based on this principle, the technical problem is solved by a voltage regulator as defined in Claim 1.

The features and advantages of a regulator according to this invention will be apparent from the description of an embodiment thereof, given by way of non-limitative example with reference to the accompanying drawings.

In the drawings:

Brief Description of the Drawings

-   Figure 1 schematically shows a switching voltage regulator realized according to the prior art.

-   Figure 1A shows a diagram reporting, in function of time, the voltage and the current signals present in the regulator of Figure 1.

-   Figure 2 shows a schematic view of a switching voltage regulator realized according to the present invention.

-   Figure 3 shows a particular embodiment of the regulator of Figure 2.

-   Figure 4 shows a diagram reporting, in function of time, the voltage and the current signals present in the regulator of Figure 2 and compared with the signals of the regulator of Figure 1.

Detailed Description

With reference to the drawings, and particularly to Figure 2 thereof, a switching voltage regulator according to this invention is overall and schematically shown at 10 in schematic form.

This regulator 10 is connected between a first Vin voltage reference of supply and a second ground reference, and comprises a power switch formed by a MOS-type power transistor driven by a driver circuit 2. The power switch is intended to drive an electric load on a node OUT, and is associated with a current loop illustrated by a circuit LC having a loop-back diode D associated therewith.

More particularly in this invention, the power switch is formed of a plurality of power transistors M1, M2, Mn-1 Mn which are connected in parallel to each other.

Essentially, the power switch of the regulator has been split into a plurality of n switches obtained by corresponding power transistors M1, M2,..., Mn which are connected in parallel to each other and are smaller than the single power transistor of the prior art. More particularly, it Wtot is the width required to obtain the desired internal resistance Ron at power-on conditions, the dimensions Wi of the individual power transistors M1, M2,..., Mn are scaled down such that:

$$\text{Wtot} = \Sigma_i^n \text{Wi},$$

and

$$W1 \geq W2 \geq W3...\geq Wn.$$

The gate terminals of each of the n transistors M1, M2,..., Mn are driven by a single driver circuit 2 such that the gate terminal of the largest transistor, M1, is discharged very fast, while the gate terminals of the other transistors, M2,..., Mn-1, Mn, of decreasing size are suitably driven by control circuit portions 4, 5, 6..., which are connected between the output of the driver circuit 2 and each respective gate terminal of the corresponding transistor.

By employing these control circuit portions 4, 5, 6,.., the size of the power transistors to be driven is allowed to decrease gradually, while also controlling the leading and trailing edges of the current.

In this way, the equivalent dimensional parameter W of the power switch is greatly reduced because, at power-off, the first transistor M1 with the largest value W1 is readily turned off. All this occurs without affecting the delivered current, since it keeps to be delivered by the remaining transistors M2,..., Mn. Also, with a reduced W, it becomes possible to control, in a finer way and with a wider margin, the edge of the current delivered from the plurality of transistors M1,..., Mn, particularly when approaching the tripping threshold of the whole set of transistors. In fact, the control no longer requires that just a few millivolts be monitored as in the prior art.

The control circuit portions may be implemented, for example, with appropriate delay blocks. Furthermore, it would be perfectly possible to separately drive the n gate terminals and/or move the control of such terminals to a location upstream of the driver circuit 2.

Compared to the prior art solutions, with this structure the transconductance of the power switch is modified since it decreases as the transistors are turned off starting with M1, and allows the voltage drop Vgs to be varied faster to obtain the same current edge. This obviously minimizes consumption and optimizes the entire system efficiency.

This solution overcomes the problems mentioned with reference to the prior art, and can be applied to N-channel as well as to P-channel topologies. The theoretical diagram shown in Figure 2 relates to a P-channel topology, but it would be very easy for a skilled person in the art to adapt the diagram for an N-channel topology.

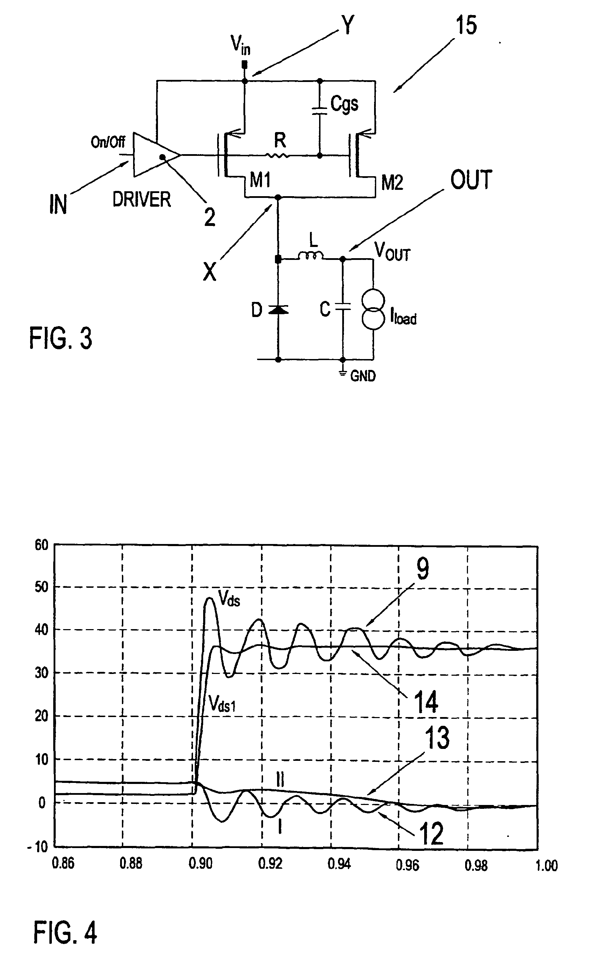

Referring to the example shown in Figure 3, a particular embodiment 15 of the inventive regulator will now be described.

In this example, the power transistor has been split for simplicity's sake into two transistors M1, M2 only. These transistors are connected in parallel to each other between the nodes Y and X, and their dimensions W1 and W2 are in agreement with the following relations:

$$W_{M1} = n \cdot W_{M2},$$

and

$$W_{TOT} = W_{M1} + W_{M2}.$$

The control circuit portion is essentially formed essentially with a delay block which is implemented by an RC network comprising a resistor R connected between the gate terminals of the transistors M1, M2, and a parasitic capacitor Cgs present between the gate and source terminals of the second power transistor M2. In this way, the larger transistor, M1, is turned off very rapidly while the second transistor M2 keeps delivering the required current to the output circuit LC until the loop-back diode begins conducting. The Vgs voltage drop of the second transistor M2 is slowly decreased (according to an exponential function with a time constant $\tau=RCgs$)in these conditions, since the transconductance of the transistor M2 is small, and by an appropriate selection of n and R, the edge of the current (about 50A/$\mu$s) delivered from the transistor M2 can be effectively controlled.

In the diagram of Figure 4, it is shown a comparison between the current edges I, I1 and the Vds voltage at the heads of the power switch in the case in which said switch is formed with a single transistor (curves 12 and 9) in accordance with the prior art, or with the plurality of paralleled power transistors provided by this invention (curves 13 and 14), the driver circuit 2 being the same in both cases. It can be easily seen that, with the inventive structure, the current power-off edge is controlled such that the drain-source voltage of the power switch will never exceed its SOA limit (40V in the example).

To achieve the same results by merely slowing down the driving, as is done in the prior art, conduction losses would occur and they would detract significantly from the overall efficiency of the regulator.

## Claims

1.  A switching voltage regulator incorporating a driver circuit of a MOS power switch, **characterized in that** said MOS switch is formed of a plurality of n power transistors (M1, M2, ..., Mn) being n > 2, the power transistors being connected in parallel to each other, having decreasing widths (W1 $\geq$ W2 $\geq$ W3...$\geq$ Wn) and being independently driven from a driver circuit (2) and **in that** the transistors of said plurality of power transistors (M1, M2, ..., Mn) are arranged in a decreasing order of transconductance.

2.  A voltage regulator according to Claim 1, **characterized in that** the widths (Wi) of the power transistors (M1, M2, ..., Mn) of said plurality of power transistors (M1, M2, ..., Mn) are chosen in such a way that:

$$\mathbf{Wtot = \Sigma_i^n Wi.}$$

where

Wi is the width of the i-th transistor of said plurality of power transistors (M1, M2, ..., Mn); and
Wtot is the width required to obtain a desired internal resistance of said switching voltage regulator at power-on conditions (Ron).

3.  A voltage regulator according to Claim 1, **characterized in that** the first (M1) of said plurality of transistors (M1, M2, ..., Mn) is directly driven directly from said driver circuit (2), while the other transistors (M2, ...; Mn) are driven through respective control circuital portions (4, 5, 6,...) connected between the output of the driver circuit (2) and each respective gate terminal of the corresponding transistor.

4.  A voltage regulator according to Claim 3, **characterized in that** said control circuital portions (4, 5, 6, ...) are delay blocks.

5.  A voltage regulator according to Claim 1, **characterized in that** the transistors (M1, ..., Mn) of said plurality are all of the same N-channel or P-channel type.

6.  A voltage regulator according to Claim 1, **characterized in that** the width of the first transistor (M1) is a multiple of the width of the second transistor (M2).

7.  A voltage regulator according to Claim 6, **characterized in that** an RC delay block is connected across the gate terminals of said transistor pair (M1, M2).

## Patentansprüche

1.  Schaltspannungsregler mit einer Treiberschaltung aus einem MOS-Leistungsschalter, **dadurch gekennzeichnet,**

**dass** der MOS-Schalter aus einer Vielzahl von n Leistungstransistoren (M1, M2, ..., Mn) mit n>2 gebildet ist, die miteinander parallel verschaltet sind, abnehmende Stärken (W1 $\geq$ W2 $\geq$ W3...$\geq$ Wn) haben und unabhängig von einer Treiberschaltung (2) angesteuert werden, und dass die Transistoren aus der Vielzahl der Leistungstransistoren (M1, M2, ..., Mn) in der Reihenfolge abnehmender Transkonduktanz angeordnet sind.

2. Spannungsregler nach Anspruch 1, **dadurch gekennzeichnet, dass** die Stärken (Wi) der Leistungstransistoren (M1, M2, ..., Mn) aus der Vielzahl von Leistungstransistoren (M1, M2, ..., Mn) so gewählt sind, dass gilt:

$$Wtot = \sum_i^n Wi$$

wobei

Wi die Stärke des i-ten Transistors aus der Vielzahl der Leistungstransistoren (M1, M2, ..., Mn) ist; und
Wtot die Stärke ist, die erforderlich ist, um einen gewünschten internen Widerstand des Schaltspannungsreglers unter Einschaltbedingungen (Ron) zu erhalten.

3. Spannungsregler nach Anspruch 1, **dadurch gekennzeichnet, dass** der erste (M1) aus der Vielzahl der Transistoren (M1, M2, ..., Mn) direkt von der Treiberschaltung (2) angesteuert wird, während die anderen Transistoren (M2, ..., Mn) durch jeweilige Steuerschaltungsabschnitte (4, 5, 6,...) angesteuert werden, die zwischen dem Ausgang der Treiberschaltung (2) und einem jeweiligen Gate-Anschluss des entsprechenden Transistors angeschlossen sind.

4. Spannungsregler nach Anspruch 3, **dadurch gekennzeichnet, dass** die Steuerschaltungsabschnitte (4, 5, 6,...) Verzögerungsblöcke sind.

5. Spannungsregler nach Anspruch 1, **dadurch gekennzeichnet, dass** die der Vielzahl entstammenden Transistoren (M1, ..., Mn) alle in derselben N-Kanal-Bauart oder P-Kanal-Bauart vorliegen.

6. Spannungsregler nach Anspruch 1, **dadurch gekennzeichnet, dass** die Stärke des ersten Transistors (M1) ein Mehrfaches der Stärke des zweiten Transistors (M2) beträgt.

7. Spannungsregler nach Anspruch 6, **dadurch gekennzeichnet, dass** an den Gate-Anschlüssen des Transistorpaars (M1, M2) ein RC-Verzögerungsblock angeschlossen ist.

**Revendications**

1. Un régulateur de tension à découpage incorporant un circuit de pilotage d'un commutateur de ligne MOS, **caractérisé en ce que** ledit commutateur de ligne MOS est formé d'une pluralité de n transistors de puissance (M1, M2, ..., Mn) avec n > 2, les transistors de puissance étant connectés en parallèle l'un avec l'autre, possédant des largeurs décroissantes (W1 $\geq$ W2 $\geq$ W3... $\geq$ Wn) et étant indépendamment pilotés depuis un circuit de pilotage (2) et **en ce que** les transistors de ladite pluralité de transistors de puissance (M1, M2, ..., Mn) sont disposés selon un ordre de transconductance décroissant.

2. Un régulateur de tension selon la revendication 1, **caractérisé en ce que** les largeurs (Wi) des transistors de puissance (M1, M2, ..., Mn) de ladite pluralité de transistors de puissance (M1, M2, ..., Mn) sont choisis d'une manière telle que :

$$Wtot = \sum_i n\ Wi$$

dans laquelle équation

Wi est la largeur du i-ème transistor de ladite pluralité de transistors de puissance (M1, M2, ..., Mn) ; et
Wtot est la largeur requise pour obtenir une résistance interne souhaitée dudit régulateur de tension à découpage sous des conditions d'alimentation en puissance ou sous tension (Ron).

**3.** Un régulateur de tension selon la revendication 1, **caractérisé en ce que** le premier (M1) de ladite pluralité de transistors de puissance (M1, M2, ..., Mn) est directement piloté depuis ledit circuit de pilotage (2), alors que les autres transistors (M2, ..., Mn) sont pilotés au moyen de portions de circuit de commande respectives (4, 5, 6, ...) connectées entre la sortie du circuit de pilotage (2) et chaque gâchette ou grille respective du transistor correspondant.

**4.** Un régulateur de tension selon la revendication 3, **caractérisé en ce que** lesdites portions de circuit de commande (4, 5, 6, ...) sont des blocs de retardement.

**5.** Un régulateur de tension selon la revendication 1, **caractérisé en ce que** les transistors (M1, ..., Mn) de ladite pluralité sont tous du même type de canal N ou de canal P.

**6.** Un régulateur de tension selon la revendication 1, **caractérisé en ce que** la largeur du premier transistor (M1) est un multiple de la largeur du deuxième transistor (M2).

**7.** Un régulateur de tension selon la revendication 6, **caractérisé en ce qu'**un bloc de retardement à capacité de résistance est connecté aux gâchettes ou grilles de ladite paire de transistors (M1, M2).

FIG. 1

FIG. 1A

FIG. 2

FIG. 3

FIG. 4